# EUROPÄISCHE PATENTANMELDUNG

(11) **EP 4 418 513 A1**
(43) Veröffentlichungstag der Anmeldung: **21.08.2024**
(21) Anmeldenummer: 23156481.6
(22) Anmeldetag: 14.02.2023
(51) Int. Cl.: H02M 1/32, H02M 3/155, H02M 1/40, H02M 1/00

(54) **VERFAHREN UND VORRICHTUNG ZUR ÜBERWACHUNG DER KERNTEMPERATUR EINER INDUKTIVITÄT MIT MAGNETKERN SOWIE PHOTOVOLTAIK-WECHSELRICHTER**

(71) Anmelder: FRONIUS INTERNATIONAL GmbH, 4643 Pettenbach (AT)
(72) Erfinder: PIRCHENFELLNER, Jürgen, 4643 Pettenbach (AT); LINDNER, Wolfgang, 4643 Pettenbach (AT); CHALUPAR, Daniel, 4643 Pettenbach (AT); NUSSBAUMER, Philipp, 4643 Pettenbach (AT)
(74) Vertreter: SONN Patentanwälte GmbH & Co KG

(57) **Zusammenfassung**

Die Erfindung betrifft ein Verfahren und eine Vorrichtung (1) zur Überwachung der Kerntemperatur (T_{K}) einer Induktivität (L) mit Magnetkern. Erfindungsgemäß wird der Strom (i_{L}(t)) mit einer vorgegebenen Frequenz (f) durch die Induktivität (L) in Abhängigkeit der Zeit (t) gemessen, die zeitliche Änderungsrate des Stromes (i_{L}(t)), also der Differenzenquotient (**Δ**i_{L}(t)/**Δ**t) oder Differentialquotient (di_{L}(t)/dt) ermittelt, und bei Überschreitung zumindest eines vorgegebenen Grenzwerts der zeitlichen Änderungsrate des Stromes (i_{L}(t)) eine Warnung als Zeichen für die Überschreitung zumindest eines Grenzwerts (T_{K,Gi}) der Kerntemperatur (T_{K}) der Induktivität (L) ausgegeben. Ebenso betrifft die Erfindung einen Photovoltaik-Wechselrichter (10) mit zumindest einer Induktivität (L) mit Magnetkern (K), wobei die Steuereinrichtung (14) zur Durchführung dieses Verfahrens zur Überwachung der Kerntemperatur (T_{K}) der zumindest einen Induktivität (L) ausgebildet ist.

## Beschreibung

Die Erfindung betrifft ein Verfahren und eine Vorrichtung zur Überwachung der Kerntemperatur einer Induktivität mit Magnetkern.

Weiters betrifft die Erfindung einen Photovoltaik-Wechselrichter mit einem Eingangs-DC/DC-Wandler mit zumindest einer Induktivität mit Magnetkern, einem Zwischenkreis und einem Ausgangs-DC/ AC-Wandler und einer Steuereinrichtung.

Induktivitäten mit Magnetkern weisen eine große Temperaturabhängigkeit auf. Insbesondere Induktivitäten mit Ferrit-Kernen sind besonders anfällig. Ab bestimmten Temperaturen des Magnetkerns tritt eine Sättigung auf, bei der die magnetische Feldstärke der Spule bei höheren Strömen nicht mehr wesentlich ansteigt. Es kommt zu unerwünschten Formen des Stromes durch die Induktivität, die sich negativ auf die normativen Anforderungen an die EMV (Elektromagnetische Verträglichkeit) und die Grenztemperatur der eingesetzten Materialien auswirkt. Die Stromverzerrung kann sogar zu unerwünschten Abschaltungen der Geräte, in welchen die Induktivitäten enthalten sind, führen. Beispielsweise können Abweichungen der Formen des Ausgangswechselstromes von Photovoltaik-Wechselrichtern, der zum Betreiben von Verbrauchern genutzt oder in ein Versorgungsnetz eingespeist werden soll, zu einer Abschaltung der Einspeisung führen. In einem solchen Fall kann die gewonnene elektrische Energie nicht genutzt werden. Im Extremfall kann bei einem Anstieg der Kerntemperatur der Induktivität sogar die Maximaltemperatur des Isolationsmaterials der Wicklung überschritten werden, was sicherheitstechnisch problematisch ist. Erschwert wird die Situation dadurch, dass manche Geräte mit derartigen Induktivitäten mit Magnetkern selbst sehr hohen Temperaturen ausgesetzt sind, sodass eine schlechtere Kühlung der elektronischen Bauteile gegeben ist. Beispielsweise können Wechselrichter von Photovoltaikanlagen, welche naturgemäß in Gebieten mit starker Sonneneinstrahlung angeordnet sind, besonders hohen Umgebungstemperaturen ausgesetzt sein. Beispielsweise sehen die Regelungen in manchen Ländern eine Abschaltung von PV-Wechselrichtern vor, wenn die Kerntemperatur von Induktivitäten einen Wert von 120° C überschreiten, da es bei derartig hohen Temperaturen zu einer Beeinträchtigung oder Zerstörung der Lackisolierung des Spulendrahts kommen kann.

Als Maßnahme gegen eine zu hohe Kerntemperatur werden Induktivitäten zur Sicherheit häufig hinsichtlich des Kernmaterials und der Regelreserven überdimensioniert, was sich durch größere Bauteile und höhere Bauteilkosten niederschlägt.

Alternativ können auch Temperatursensoren am Magnetkern der Induktivität angebracht werden, sodass im Falle einer Überschreitung vorgegebener Kerntemperaturen beispielsweise die Leistung reduziert werden kann. Man spricht hier vom sogenannten "Derating". Abgesehen von der meist unerwünschten Reduktion der Leistung führen derartige zusätzliche Sensoren und deren Beschaltung wiederum zu einem Bauteil-Mehraufwand, was sich bei Geräten mit einer großen Anzahl an Induktivitäten mit Magnetkern besonders auswirkt.

Schließlich kann eine verbesserte Kühlung der Induktivitäten mit Magnetkern, beispielsweise durch entsprechende Lüfter, gegen eine Überschreitung kritischer Kerntemperaturen eingesetzt werden. Auch diese Maßnahmen sind aufgrund des damit verbundenen Mehraufwands unwirtschaftlich.

Die Aufgabe der vorliegenden Erfindung besteht daher in der Schaffung eines oben genannten Verfahrens und einer oben genannten Vorrichtung zur Überwachung der Kerntemperatur einer Induktivität mit Magnetkern, durch welche möglichst einfach eine Überhitzung der Induktivität mit den einhergehenden Veränderungen der Stromform sowie den einhergehenden Sättigungseffekten wirkungsvoll und einfach vermieden werden kann. Der Mehraufwand soll möglichst gering und somit kostengünstig sein. Insbesondere sollen keine zusätzlichen Bauteile oder Sensoren notwendig sein. Die Erfindung soll im Besonderen bei Induktivitäten mit Magnetkern, welche in Photovoltaik-Wechselrichtern angeordnet sind, angewendet werden können, um einen möglichst optimalen Betrieb des Photovoltaik-Wechselrichters ohne wesentlichem zusätzlichen Aufwand zu ermöglichen.

Gelöst wird die erfindungsgemäße Aufgabe in verfahrensmäßiger Hinsicht dadurch, dass der Strom mit einer vorgegebenen Frequenz durch die Induktivität in Abhängigkeit der Zeit gemessen wird, die zeitliche Änderungsrate des Stromes ermittelt wird, und bei Überschreitung zumindest eines vorgegebenen Grenzwerts der zeitlichen Änderungsrate des Stromes eine Warnung als Zeichen für die Überschreitung zumindest eines Grenzwerts der Kerntemperatur der Induktivität ausgegeben wird. Erfindungsgemäß wird also ohne zusätzlichem Bauteilaufwand die Form des Stromes durch die Induktivität mit Magnetkern analysiert und Abweichungen der Änderungsrate des Stromes als Indikator für die Kerntemperatur des Magnetkerns herangezogen. Bei vielen Geräten mit Induktivitäten mit Magnetkern ist ohnedies beispielsweise zu Regelungszwecken eine Messung des Stromes durch die Induktivität notwendig und vorgesehen, weshalb sich der Zusatzaufwand meist auf eine Software-technisch implementierte Verarbeitung des gemessenen Stromes beschränkt. Somit kann die Kerntemperatur über die Analyse der Änderungsrate des Stromes durch die Induktivität mit einer sehr guten Näherung abgeschätzt werden, ohne dass Temperatursensoren dafür notwendig sind. Durch entsprechende Maßnahmen beim Feststellen kritischer Kerntemperaturen können daher die damit einhergehenden Folgen einer Stromverzerrung und Sättigung der Induktivität einfach verhindert oder zumindest weitgehend reduziert werden.

Die Änderungsrate des Stromes durch die Induktivität kann durch Ermittlung des Differenzenquotienten des Stromes in Abhängigkeit der Zeit, also der Steigung der Geraden durch den zeitlichen Verlauf des Stromes durch zwei Punkte ermittelt werden. Dies stellt eine einfache Methode der Ermittlung der Änderungsrate dar.

Alternativ kann die Änderungsrate des Stromes durch die Induktivität auch durch Ermittlung des Differentialquotienten des Stromes in Abhängigkeit der Zeit, also der Steigung der Tangente in einem Punkt des zeitlichen Verlaufs des Stromes bzw. der ersten zeitlichen Ableitung des Stromes ermittelt werden. Der Differentialquotient entspricht also dem Differenzenquotient bei gegen Null gehendem Abstand der beiden Messpunkte.

Vorzugsweise wird der Strom durch die Induktivität mit einer Abtastfrequenz gemessen, welche dem 20-fachen bis 40-fachen der Frequenz des Stromes durch die Induktivität entspricht. Dadurch wird das Nyquist-Shannon-Abtasttheorem entsprechend übererfüllt und es können innerhalb einer Periode des Stromverlaufs ausreichend viele Stromwerte gemessen werden, die eine genaue Ermittlung der zeitlichen Änderungsrate des Stromes erlauben. Der Messaufwand hält sich bei einer solchen Anzahl an Messwerten pro Periode in Grenzen.

Gemäß einem weiteren Merkmal des erfindungsgemäßen Verfahrens ist vorgesehen, dass mehrere Werte, vorzugsweise 4 bis 10 Werte, des gemessenen Stromes durch die Induktivität gemittelt werden. Durch eine derartige Mittelwertbildung können Ausreißer, wie zum Beispiel unerwünschte Spitzen, welche eingekoppelt werden, und Fehlmessungen verhindert werden und die resultierenden Messwerte entsprechend geglättet werden.

Vorzugsweise wird bei Überschreitung zumindest eines vorgegebenen Grenzwerts der zeitlichen Änderungsrate des Stromes eine Warnung ausgegeben. Beim Grenzwert der zeitlichen Änderungsrate kann es sich sowohl um einen absoluten Grenzwert, beispielsweise einem absoluten Grenzwert der Steigung des Stromverlaufs (Differenzenquotient oder Differentialquotient), als auch einem relativen Grenzwert, beispielsweise einer 30%-igen Abweichung von der Steigung des Stromverlaufs, im vorhergesehenen Strombereich, bei Normaltemperatur, handeln. Bei mehreren vorgegebenen Grenzwerten der zeitlichen Änderungsrate des Stromes können verschiedene Stufen und entsprechend verschiedene Warnungen ausgegeben werden. Es können durch verschiedene Grenzwerte verschieden kritische Bereiche der Kerntemperatur der Induktivität definiert und gekennzeichnet werden.

Die ausgegebenen Warnungen bei Erreichen des zumindest einen Grenzwerts der Änderungsrate des Stromes durch die Induktivität können unterschiedliche Konsequenzen haben, welche einzeln oder auch in Kombination angewendet werden können.

Beispielsweise kann bei Ausgabe einer Warnung der Strom durch die Induktivität als Sicherheitsvorkehrung einfach abgeschaltet werden. Dadurch kann eine Überhitzung der Induktivität und deren Folgen sicher verhindert werden.

Da eine Abschaltung elektrischer Geräte mit der betreffenden Induktivität mit Magnetkern in der Regel unerwünscht ist, wird die Abschaltung des Stromes nur für eine vorgegebene Zeitdauer erfolgen. Beispielsweise kann eine Abschaltung von einigen Minuten ausreichen, um eine Reduktion der Kerntemperatur zu bewirken. Danach kann der Strom durch die Induktivität wieder eingeschaltet und somit das entsprechende Gerät mit der Induktivität wieder in Betrieb genommen werden.

Alternativ zu einer Abschaltung des Stromes bei Überschreitung eines vorbestimmten Grenzwerts der Änderungsrate des Stromes bzw. der Überschreitung einer kritischen Kerntemperatur der Induktivität kann bei Ausgabe einer Warnung auch nur die Amplitude des Stromes durch die Induktivität reduziert werden. Dies kommt dem an sich bekannten "Derating", also einer Leistungsreduktion gleich. Anstelle einer kompletten Abschaltung des jeweiligen Geräts, also beispielsweise des Photovoltaik-Wechselrichters, kann das Gerät auch mit reduzierter Leistung weiterbetrieben werden.

Schließlich kann bei Ausgabe einer Warnung die Induktivität auch gekühlt werden, beispielsweise ein Lüfter aktiviert oder dessen Drehzahl erhöht werden. Diese Zusatzmaßnahme stellt allerdings einen an sich unerwünschten Bauteilmehraufwand dar und sollte im Grunde vermieden werden. Im Falle des Vorhandenseins einer entsprechenden Kühlung kann diese aber durch entsprechend angepasste Regelungsmaßnahmen im Falle einer Warnung aktiviert oder verstärkt werden. Der zusätzliche Regelungsaufwand, der meist softwaremäßig implementiert wird, hält sich dabei in Grenzen.

Gelöst wird die erfindungsgemäße Aufgabe auch durch eine Vorrichtung zur Überwachung der Kerntemperatur einer Induktivität mit Magnetkern, wobei eine Messeinrichtung zur Messung des Stromes mit einer vorgegebenen Frequenz durch die Induktivität in Abhängigkeit der Zeit vorgesehen ist, und weiters eine mit der Messeinrichtung verbundene Verarbeitungseinrichtung zur Ermittlung der zeitlichen Änderungsrate des Stromes und zum Vergleich der zeitlichen Änderungsrate des Stromes mit zumindest einem vorgegebenen Grenzwert der zeitlichen Änderungsrate des Stromes und der Ausgabe einer Warnung bei Überschreitung des zumindest einen Grenzwerts der zeitlichen Änderungsrate des Stromes als Zeichen für die Überschreitung zumindest eines Grenzwerts der Kerntemperatur der Induktivität vorgesehen ist. Eine derartige Vorrichtung ist relativ einfach und kostengünstig und ohne zusätzlichem Bauteilaufwand implementierbar. Zu den dadurch erzielbaren Vorteilen wird auf die obige Beschreibung des Verfahrens verwiesen.

Gemäß einem Merkmal der Erfindung ist die Verarbeitungseinrichtung zur Ermittlung des Differenzenquotienten des Stromes oder zur Ermittlung des Differentialquotienten des Stromes in Abhängigkeit der Zeit als zeitliche Änderungsrate des Stromes ausgebildet. Es wird also die zeitliche Änderung des Stromes durch die Induktivität mit entsprechenden mathematischen Methoden ermittelt.

Gelöst wird die erfindungsgemäße Aufgabe insbesondere auch durch einen Photovoltaik-Wechselrichter mit einem Eingangs-DC/DC-Wandler mit zumindest einer Induktivität mit Magnetkern, einem Zwischenkreis und einem Ausgangs-DC/AC-Wandler und einer Steuereinrichtung, wobei die Steuereinrichtung zur Durchführung des oben beschriebenen Verfahrens zur Überwachung der Kerntemperatur der zumindest einen Induktivität mit Magnetkern ausgebildet ist. Gerade bei Wechselrichtern höherer Leistung und mit höheren Frequenzen beispielsweise über 100 kHz werden verstärkt Induktivitäten mit Ferritkernen eingesetzt, welche eine große Temperaturabhängigkeit aufweisen. Durch den Einsatz moderner Halbleiterbauelemente aus GaN und SiC steigen die Schaltfrequenzen immer mehr an. Durch die relativ einfache und kostengünstige Implementierung des oben beschriebenen Verfahrens in der ohnedies vorhandenen Steuereinrichtung des PV-Wechselrichters kann ein optimaler Betrieb gewährleistet werden und es können Überhitzungen der Induktivitäten mit Magnetkern und die damit verbundenen Folgen ohne zusätzlichem Bauteilaufwand wirkungsvoll verhindert werden. Bei einer größeren Anzahl an Induktivitäten mit Magnetkern wird das erfindungsgemäße Verfahren zur Überwachung der Kerntemperatur vorzugsweise bei allen Induktivitäten einzeln vorgenommen und werden entsprechende Konsequenzen im Falle einer Überschreitung der Kerntemperatur auch nur bei den betroffenen Induktivitäten gesetzt. Dadurch kann beispielsweise ein Teilbetrieb einer PV-Anlage mit vielen Wechselrichtern oder vielen parallelen Eingängen gewährleistet werden und die PV-Anlage braucht nicht vollständig deaktiviert zu werden, wodurch keine Energie verwendet bzw. eingespeist werden könnte.

Wenn der Photovoltaik-Wechselrichter einen Batterie-DC/DC-Wandler mit zumindest einer Induktivität mit Magnetkern zur Verbindung mit einer Speicherbatterie bzw. einem Energiespeicher aufweist, ist die Steuereinrichtung vorzugsweise auch zur Durchführung des erfindungsgemäßen Verfahrens zur Überwachung der Kerntemperatur der zumindest einen Induktivität mit Magnetkern ausgebildet. Dadurch kann die Funktion des sogenannten Hybrid-Wechselrichters noch weiter verbessert werden und die gesamte Leistungsbilanz verbessert werden.

Die vorliegende Erfindung wird anhand der beigefügten Figuren näher erläutert. Darin zeigen:
- Fig. 1: ein schematisches Schaltbild einer Induktivität mit Magnetkern;
- Fig. 2: einen typischen Verlauf des Stromes durch eine Induktivität mit Magnetkern bei Normaltemperatur und die zeitliche Ableitung des Stromes;
- Fig. 3: den Verlauf des Stromes durch eine Induktivität mit Magnetkern und die zeitliche Ableitung des Stromes bei thermischer Überlastung der Induktivität;
- Fig. 4: den typischen Verlauf der Induktivität mit Magnetkern in Abhängigkeit des Stromes bei Normaltemperatur und thermischer Überlastung;
- Fig. 5: ein schematisches Flussdiagramm zur Veranschaulichung des erfindungsgemäßen Verfahrens zur Überwachung der Temperatur einer Induktivität mit Magnetkern;
- Fig. 6: ein schematisches Blockschaltbild zur Veranschaulichung der erfindungsgemäßen Vorrichtung zur Überwachung der Temperatur einer Induktivität mit Magnetkern;
- Fig. 7: die zeitlichen Verläufe des Stromes und der zeitlichen Ableitung des Stromes durch eine Induktivität mit Magnetkern bei thermischer Überlastung und die Anwendung des erfindungsgemäßen Verfahrens; und
- Fig. 8: die Anwendung des erfindungsgemäßen Verfahrens und der erfindungsgemäßen Vorrichtung bei einem PhotovoltaikWechselrichter in einem schematischen Blockschaltbild.

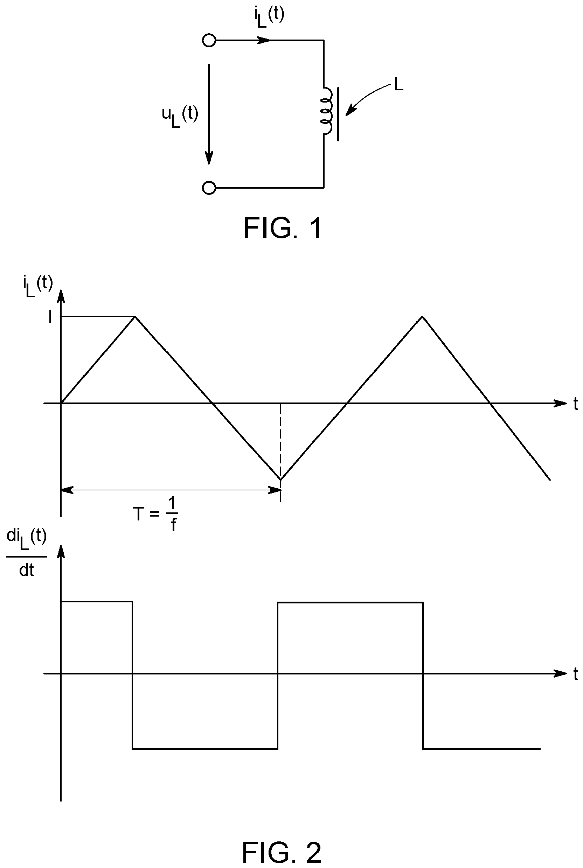

Fig. 1 zeigt ein schematisches Schaltbild einer Induktivität L mit Magnetkern. Fließt ein zeitabhängiger Strom i_{L}(t) mit einer bestimmten Frequenz f durch die Induktivität L, wird ein Magnetfeld erzeugt und eine zeitabhängige Spannung u_{L}(t) hervorgerufen.

In Fig. 2 ist ein typischer Verlauf des Stromes i_{L}(t) durch eine Induktivität L mit Magnetkern bei Normaltemperatur dargestellt. Der ideale zeitliche Verlauf des Stromes i_{L}(t) ist im Wesentlichen Dreieck-förmig mit einer maximalen Amplitude I und einer Periode T, welche der reziproken Frequenz f entspricht. Die zeitliche Änderungsrate des Stromes i_{L}(t) ist im unteren Diagramm in Form der zeitlichen Ableitung di_{L}(t)/dt des Stromes i_{L}(t) dargestellt. Der Verlauf der zeitlichen Ableitung di_{L}(t)/dt des idealen Stromes i_{L}(t) durch die Induktivität L weist im Wesentlichen einen Rechteck-Verlauf auf.

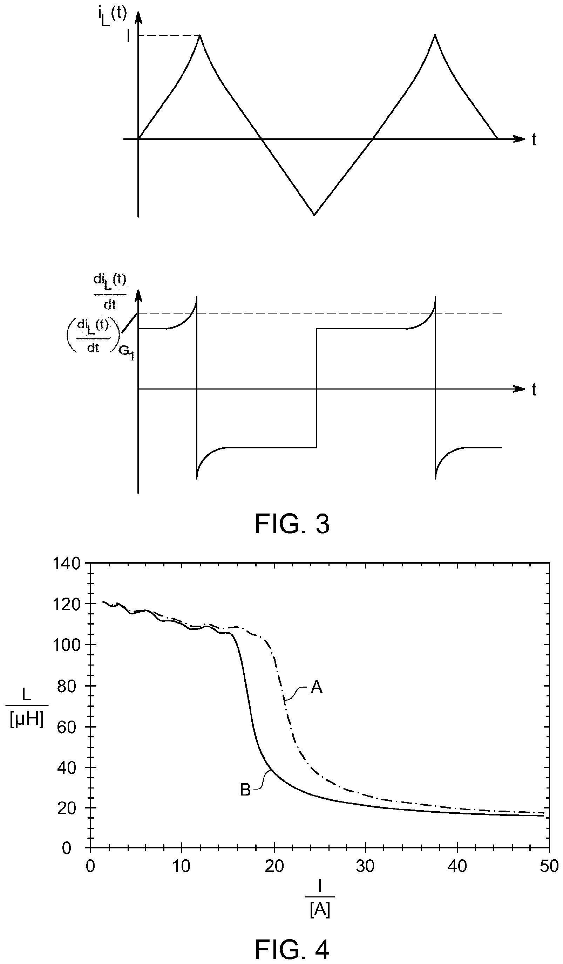

Fig. 3 zeigt den Verlauf des Stromes i_{L}(t) durch die Induktivität L mit Magnetkern bei thermischer Überlastung der Induktivität L, also bei höherer Kerntemperatur T_{K}. Durch Sättigungseffekte der Induktivität L kommt es zu einer ausgeprägten Änderung der Form des zeitlichen Verlaufs des Stromes i_{L}(t), welcher sich typischerweise in einem steileren Anstieg des Stromes i_{L}(t) bei den Maxima gegenüber dem Anstieg im Bereich der Nulldurchgänge manifestiert. Der zeitliche Verlauf des Stromes i_{L}(t) weicht deutlich von der idealen Dreiecksform gemäß Fig. 2 ab. Noch deutlicher wird diese Abweichung im Verlauf der zeitlichen Ableitung di_{L}(t)/dt des Stromes i_{L}(t) durch die Induktivität L, welche deutliche Überlagerungen von Spitzen gegenüber der idealen Rechteckform aufweisen. Wird nun ein vorbestimmter Grenzwert (di_{L}(t)/dt)_{G1} der Ableitung di_{L}(t)/dt des Stromes i_{L}(t) durch die Induktivität L festgelegt, kann eine Überschreitung des Grenzwerts (di_{L}(t)/dt)_{G1} einfach festgestellt werden und als Zeichen einer Überschreitung einer kritischen Kerntemperatur T_{K,G1} herangezogen werden. Somit kann aus dem Verlauf des Stromes i_{L}(t) durch die Induktivität L bzw. der ermittelten Änderungsrate bzw. des Anstiegs des Stromes i_{L}(t) auf die Kerntemperatur T_{K} der Induktivität L rückgeschlossen werden, ohne dass aufwändige Maßnahmen, wie zum Beispiel Temperatursensoren, notwendig sind.

In Fig. 4 ist der typische Verlauf der Induktivität L mit Magnetkern in Abhängigkeit der Amplitude I des Stromes i_{L}(t) bei normaler Kerntemperatur T_{K,N} beispielsweise bei 25° C (Verlauf A) und bei thermischer Überlastung bei einer höheren Kerntemperatur T_{K,H} beispielsweise bei 90° C (Verlauf B) wiedergegeben. Dementsprechend verschiebt sich die Kurve bei höheren Temperaturen des Magnetkerns in Richtung niedrigerer Werte des Stromes I (im Diagramm in die linke Richtung). Dementsprechend sinkt der Sättigungsstrom der Induktivität mit steigenden Kerntemperaturen T_{K}.

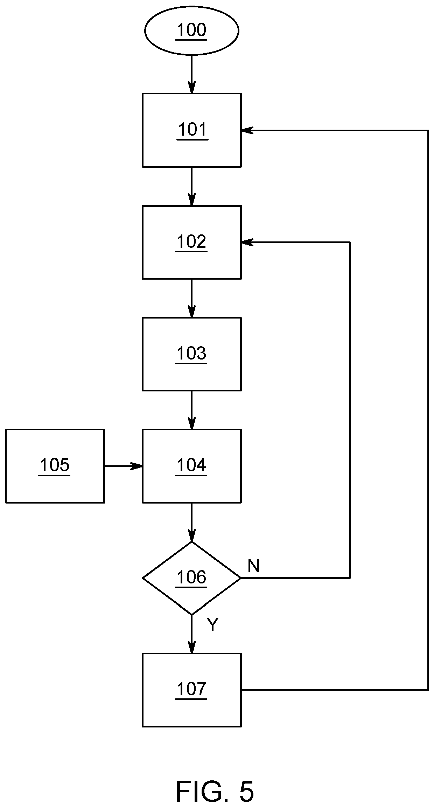

Fig. 5 zeigt ein schematisches Flussdiagramm zur Veranschaulichung des erfindungsgemäßen Verfahrens zur Überwachung der Kerntemperatur T_{K} einer Induktivität L mit Magnetkern. Nach dem Start gemäß Block 100 im Flussdiagramm wird der Strom i_{L}(t) durch die Induktivität L mit Magnetkern erfasst (Block 101) und daraus Messwerte mit einer vorgegebenen Abtastfrequenz f_{A} ermittelt (Block 102). Aus den Messwerten des Stromes i_{L}(t) wird die zeitliche Änderungsrate, also der Differenzenquotient Δi_{L}(t)/Δt des Strom i_{L}(t)oder der Differentialquotient di_{L}(t)/dt des Strom i_{L}(t), also die zeitliche Ableitung des Stromes i_{L}(t) ermittelt (Block 103). Im nächsten Verfahrensschritt gemäß Block 104 findet ein Vergleich der ermittelten Änderungsrate des Stromes i_{L}(T) mit gespeicherten Werten (Block 105) statt. Bei der folgenden Abfrage (Block 106) wird festgestellt, ob ein vorgegebener Grenzwert der zeitlichen Änderungsrate des Stromes i_{L}(t) überschritten wurde. Ist dies nicht der Fall (N), so ist das ein Zeichen für normale Kerntemperatur T_{K} im Magnetkern der Induktivität L und das Verfahren wird wieder mit der Messung des Stromes i_{L}(t) (Block 102) fortgesetzt. Wenn der vorgegebene Grenzwert der Änderungsrate des Stromes i_{L}(t) überschritten wird (Y), ist das ein Zeichen für die Überschreitung eines Grenzwerts T_{K,Gi} der Kerntemperatur T_{K} der Induktivität L und es folgen entsprechende Konsequenzen (Block 107). Diese Konsequenzen können eine Abschaltung des Stromes i_{L}(t), eine Reduktion der Amplitude I des Stromes i_{L}(t) durch die Induktivität L bis hin zu einer Kühlung der Induktivität L reichen.

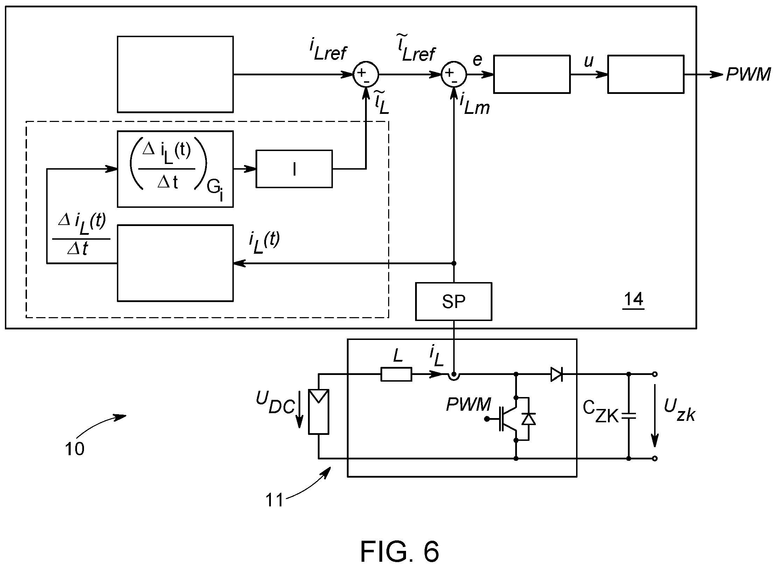

In Fig. 6 ist ein schematisches Blockschaltbild zur Veranschaulichung der erfindungsgemäßen Vorrichtung zur Überwachung der Kerntemperatur T_{K} einer Induktivität L mit Magnetkern, welche in einem Photovoltaik-Wechselrichter 10 vorgesehen ist, dargestellt. Die Gleichspannung U_{DC} von Photovoltaikmodulen wird in einem Eingangs-DC/DC-Wandler 11 mit einer Induktivität L mit Magnetkern in eine Zwischenkreisspannung U_{ZK} transformiert. Üblicherweise besitzt der PV-Wechselrichter 10 eine Steuereinrichtung 14, welche die Regelung der Schalter im Eingangs-DC/DC-Wandler 11 vornimmt. Die Regelung erfolgt üblicherweise über eine Pulsweitenmodulation PWM. Für die Regelung ist eine Analyse des Stromes i_{L}(t) durch die Induktivität L des Eingangs-DC/DC-Wandlers 11 notwendig, also die entsprechende Hardware für die Messung des Stromes i_{L}(t) vorhanden, welche eine Signalverarbeitung SP und einen Vergleich mit gespeicherten Referenzströmen i_{L,Ref} bzw. berechneten Sollwerten des Stromes zur Regelung des Stromes i_{L}(t) und Modulation der Pulsdauer PWM vornimmt. Erfindungsgemäß kommt nun der strichliert eingezeichnete Teil hinzu, der üblicherweise softwaremäßig in der Steuereinrichtung 14 implementiert wird. Das Verfahren zur Überwachung der Kerntemperatur T_{K} der Induktivität L sieht nun vor, dass der Strom i_{L}(t) gemessen wird, die zeitliche Änderungsrate des Stromes i_{L}(t), beispielsweise in Form der Bildung des Differenzenquotienten Δi_{L}(t)/Δt) ermittelt wird, und bei Überschreitung zumindest eines vorgegebenen Grenzwerts (Δi_{L}(t)/Δt))Gi des Differenzenquotienten eine Warnung als Zeichen für die Überschreitung zumindest eines Grenzwerts T_{K,Gi} der Kerntemperatur T_{K} der Induktivität L ausgegeben wird. In der Folge kann die Amplitude I des Stromes i_{L}(t) reduziert werden, also ein "Derating" vorgenommen werden. Dadurch wird eine Überhitzung der Induktivität L und die damit verbundenen Probleme wirkungsvoll verhindert, ohne dass aufwändige Sensoren zur Messung der Kerntemperatur T_{K} der Induktivität notwendig sind.

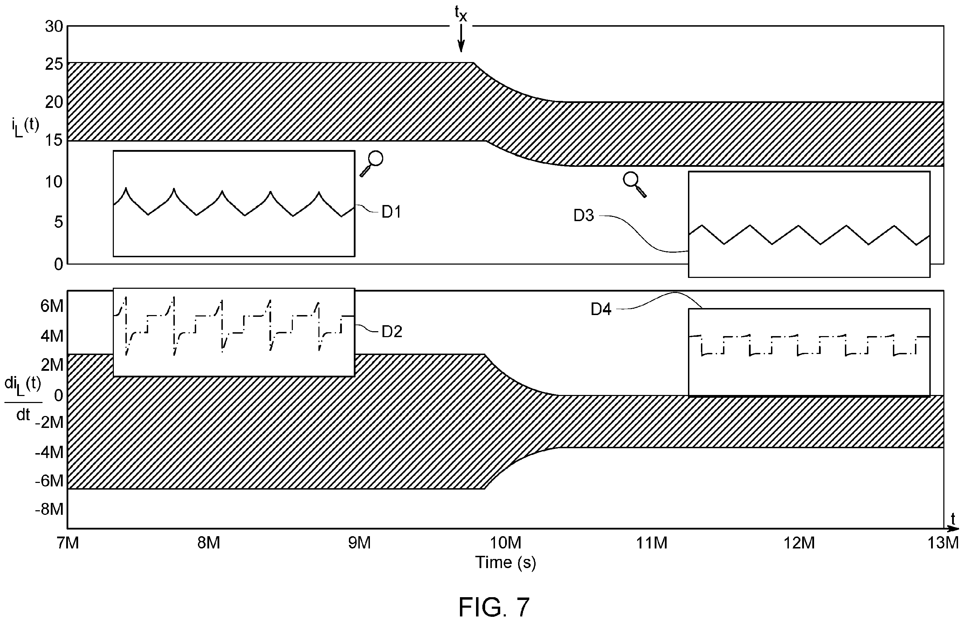

Fig. 7 zeigt die zeitlichen Verläufe des Stromes i_{L}(t) und der zeitlichen Ableitung di_{L}(t)/dt des Stromes i_{L}(t) durch eine Induktivität L mit Magnetkern bei thermischer Überlastung und die Anwendung des erfindungsgemäßen Verfahrens. Schraffiert ist jeweils die Einhüllende der zeitlichen Verläufe des Stromes i_{L}(t) und dessen zeitlicher Ableitung di_{L}(t)/dt schematisch angedeutet. In den Details D1 bis D4 sind die Verläufe zeitlich gedehnt dargestellt. Im ersten Teil des Verfahrens ist anhand der Details D1 und D2 erkennbar, dass die Änderungsrate des Stromes i_{L}(t) von der idealen Rechteckform abweicht. Zum Zeitpunkt tₓ wird eine Reduktion der Leistung ("Derating") in Form einer Reduktion der Amplitude I des Stromes i_{L}(t) durch die Induktivität L vorgenommen. Dadurch kommt es zu einer Normalisierung der Verläufe des Stromes i_{L}(t) (Detail D3) und der Ableitung di_{L}(t)/dt (Detail D4). In weiterer Folge kommt es schließlich zu einer Reduktion der Kerntemperatur T_{K} der Induktivität L (in Fig. 7 nicht dargestellt, da sich die Temperatur erst im Minutenbereich ändert).

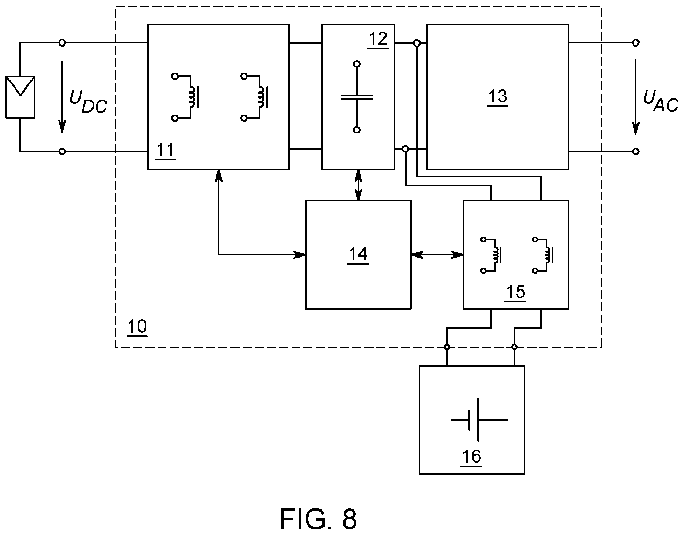

Schließlich zeigt Fig. 8 die Anwendung des erfindungsgemäßen Verfahrens und der erfindungsgemäßen Vorrichtung bei einem Photovoltaik-Wechselrichter 10 in einem schematischen Blockschaltbild. Der PV-Wechselrichter 10 weist einen Eingangs-DC/DC-Wandler 11 mit zumindest einer Induktivität L mit Magnetkern, einen Zwischenkreis 12 und einen Ausgangs-DC/AC-Wandler 13 und eine Steuereinrichtung 14 auf. Zusätzlich kann ein Batterie-DC/ DC-Wandler 15 mit zumindest einer Induktivität L mit Magnetkern zur Verbindung mit einer Speicherbatterie 16 vorgesehen sein. Der PV-Wechselrichter 10 wandelt die von einem PV-Modul erzeugte Gleichspannung U_{DC} in eine Wechselspannung U_{AC} am Ausgang um, welche entsprechende Verbraucher (nicht dargestellt) mit elektrischer Energie versorgen oder in ein Versorgungsnetz (nicht dargestellt) eingespeist werden kann. Erfindungsgemäß ist die Steuereinrichtung 14 des PV-Wechselrichters 10 zur Durchführung des beschriebenen Verfahrens zur Überwachung der Kerntemperatur T_{K} der Induktivitäten L im Eingangs-DC/DC-Wandler 11 und allenfalls Batterie-DC/DC-Wandlers 15 ausgebildet.

Dies ermöglicht einen optimalen Betrieb des PV-Wechselrichters 10 auch ohne aufwändige Messung der Kerntemperaturen T_{K} der Induktivitäten L. Das erfindungsgemäße Verfahren kann relativ einfach und kostengünstig softwaremäßig in der vorhandenen Steuereinrichtung 14 des PV-Wechselrichters 10 implementiert werden.

## Patentansprüche

1. Verfahren zur Überwachung der Kerntemperatur (T_{K}) einer Induktivität (L) mit Magnetkern, **dadurch gekennzeichnet, dass** der Strom (i_{L}(t)) mit einer vorgegebenen Frequenz (f) durch die Induktivität (L) in Abhängigkeit der Zeit (t) gemessen wird, die zeitliche Änderungsrate des Stromes (i_{L}(t)) ermittelt wird, und bei Überschreitung zumindest eines vorgegebenen Grenzwerts der zeitlichen Änderungsrate des Stromes eine Warnung als Zeichen für die Überschreitung zumindest eines Grenzwerts (T_{K,Gi}) der Kerntemperatur (T_{K}) der Induktivität (L) ausgegeben wird.

2. Verfahren nach Anspruch 1, **dadurch gekennzeichnet, dass** der Differenzenquotient (Δi_{L}(t)/Δt) des Stromes (i_{L}(t)) in Abhängigkeit der Zeit (t) als zeitliche Änderungsrate des Stromes (i_{L}(t)) ermittelt wird.

3. Verfahren nach Anspruch 1, **dadurch gekennzeichnet, dass** der Differentialquotient (di_{L}(t)/dt) des Stromes (i_{L}(t)) in Abhängigkeit der Zeit (t) als zeitliche Änderungsrate des Stromes (i_{L}(t)) ermittelt wird.

4. Verfahren nach einem der Ansprüche 1 bis 3, **dadurch gekennzeichnet, dass** der Strom (i_{L}(t)) mit einer Abtastfrequenz (f_{A}) gemessen wird, welche dem 20-fachen bis 40-fachen der Frequenz (f) des Stromes (i_{L}(t)) durch die Induktivität (L) entspricht.

5. Verfahren nach einem der Ansprüche 1 bis 4, **dadurch gekennzeichnet, dass** mehrere Werte, vorzugsweise 4 bis 10 Werte, des gemessenen Stromes (i_{L}(t)) gemittelt werden.

6. Verfahren nach einem der Ansprüche 1 bis 5, **dadurch gekennzeichnet, dass** bei Überschreitung zumindest eines vorgegebenen Grenzwerts der zeitlichen Änderungsrate des Stromes (i_{L}(t)) eine Warnung ausgegeben wird.

7. Verfahren nach einem der Ansprüche 1 bis 6, **dadurch gekennzeichnet, dass** bei Ausgabe einer Warnung der Strom (i_{L}(t)) durch die Induktivität (L) abgeschaltet wird.

8. Verfahren nach Anspruch 7, **dadurch gekennzeichnet, dass** der Strom (i_{L}(t)) für eine vorgegebene Zeitdauer (Δt) abgeschaltet wird.

9. Verfahren nach einem der Ansprüche 1 bis 8, **dadurch gekennzeichnet, dass** bei Ausgabe einer Warnung die Amplitude (I) des Stromes (i_{L}(t)) reduziert wird.

10. Verfahren nach einem der Ansprüche 1 bis 9, **dadurch gekennzeichnet, dass** bei Ausgabe einer Warnung die Induktivität (L) gekühlt wird.

11. Vorrichtung (1) zur Überwachung der Kerntemperatur (T_{K}) einer Induktivität (L) mit Magnetkern, **dadurch gekennzeichnet, dass** eine Messeinrichtung (2) zur Messung des Stromes (i_{L}(t)) mit einer vorgegebenen Frequenz (f) durch die Induktivität (L) in Abhängigkeit der Zeit (t) vorgesehen ist, eine mit der Messeinrichtung (2) verbundene Verarbeitungseinrichtung (3) zur Ermittlung der zeitlichen Änderungsrate des Stromes (i_{L}(t)) und zum Vergleich der zeitlichen Änderungsrate des Stromes mit zumindest einem vorgegebenen Grenzwert der zeitlichen Änderungsrate des Stromes (i_{L}(t)) und der Ausgabe einer Warnung bei Überschreitung des zumindest einen Grenzwerts der zeitlichen Änderungsrate des Stromes (i_{L}(t)) als Zeichen für die Überschreitung zumindest eines Grenzwerts (T_{K,Gi}) der Kerntemperatur (T_{K}) der Induktivität (L) vorgesehen ist.

12. Vorrichtung (1) nach Anspruch 10, **dadurch gekennzeichnet, dass** die Verarbeitungseinrichtung (3) zur Ermittlung des Differenzenquotienten (Δi_{L}(t)/Δt) des Stromes (i_{L}(t)) in Abhängigkeit der Zeit (t) als zeitliche Änderungsrate des Stromes (i_{L}(t)) ausgebildet ist.

13. Vorrichtung (1) nach Anspruch 10, **dadurch gekennzeichnet, dass** die Verarbeitungseinrichtung (3) zur Ermittlung des Differentialquotienten (di_{L}(t)/dt) des Stromes (i_{L}(t)) in Abhängigkeit der Zeit (t) als zeitliche Änderungsrate des Stromes (i_{L}(t)) ausgebildet ist.

14. Photovoltaik-Wechselrichter (10) mit einem Eingangs-DC/DC-Wandler (11) mit zumindest einer Induktivität (L) mit Magnetkern, einem Zwischenkreis (12) und einem Ausgangs-DC/AC-Wandler (13) und einer Steuereinrichtung (14), **dadurch gekennzeichnet, dass** die Steuereinrichtung (14) zur Durchführung des Verfahrens zur Überwachung der Kerntemperatur (T_{K}) der zumindest einen Induktivität (L) mit Magnetkern nach einem der Ansprüche 1 bis 10 ausgebildet ist.

15. Photovoltaik-Wechselrichter (10) nach Anspruch 14, **dadurch gekennzeichnet, dass** ein Batterie-DC/DC-Wandler (15) mit zumindest einer Induktivität (L) mit Magnetkern zur Verbindung mit einer Speicherbatterie (17) vorgesehen ist, und dass die Steuereinrichtung (14) zur Durchführung des Verfahrens zur Überwachung der Kerntemperatur (T_{K}) der zumindest einen Induktivität (L) mit Magnetkern nach einem der Ansprüche 1 bis 10 ausgebildet ist.
